Europäisches Patentamt

European Patent Office

Office européen des brevets

(11) Numéro de publication: **0 352 157**
**A1**

## DEMANDE DE BREVET EUROPEEN

(21) Numéro de dépôt: 89401865.4

(22) Date de dépôt: 29.06.89

(51) Int. Cl.⁵: **G 01 B 11/30**

(30) Priorité: 20.07.88 FR 8809833

(43) Date de publication de la demande:
24.01.90 Bulletin 90/04

(84) Etats contractants désignés:
AT BE CH DE ES FR GB GR IT LI LU NL SE

(71) Demandeur: INSTITUT DE RECHERCHES DE LA
SIDERURGIE FRANCAISE (IRSID)
Immeuble Elysées-la-Défense 19, Le Parvis
F-92800 Puteaux La Défence 4 (FR)

(72) Inventeur: Siener, Pierre J.M.
44, Grand'rue Manom
F-57100 Thionville (FR)

Steiner, Antoine R.
43, rue du XXème Corps Américain
F-57000 Metz (FR)

(74) Mandataire: Ventavoli, Roger et al
IRSID Service de la Propriété Industrielle B.P. 320 Voie
Romaine
F-57214 Maizières-lès-Metz Cédex (FR)

(54) Procédé et dispositif d'identification du fini d'une surface métallique.

(57) Ce dispositif d'identification du fini d'une surface métallique comprend :

. des moyens 5 d'éclairage global omnidirectionnel de ladite surface,

. des moyens 6,7 de formation d'une image numérique matricielle de ladite surface, où chaque point matriciel est associé à une valeur de l'intensité de gris fonction de l'intensité lumineuse émise par l'élément de surface correspondant,

. des moyens 9 de traitement de l'ensemble des valeurs recueillies agencés de manière à :

- calculer les quatre premiers moments statistiques de l'histogramme, réalisé pour l'ensemble des points matriciels, du nombre de points par niveau d'intensité de gris,

- former avec ces quatre moments un quadruplet représentatif de l'image et constituant quatre coordonnées d'un vecteur d'identification de l'image, d'ordre supérieur ou égal à quatre,

- comparer le quadruplet de l'image à au moins l'un de plusieurs quadruplets préalablement répertoriés et identifiés,

- et si ledit quadruplet de l'image est égal, compte tenu de tolérances prédéterminées pour chaque moment à l'un desdits quadruplets répertoriés, attribuer audit quadruplet de l'image l'identité propre audit quadruplet répertorié.

. et des moyens de restitution des résultats dudit traitement.

Fig-1

Bundesdruckerei Berlin

## Description

### PROCEDE ET DISPOSITIF D'IDENTIFICATION DU FINI D'UNE SURFACE METALLIQUE

L'invention concerne l'identification du fini d'une surface métallique.

On connaît déjà de nombreux procédés de détermination optique, et donc sans contact, de différentes caractéristiques d'une surface. On peut se référer par exemple aux documents FR-A-2 484 633 et FR-A-2 172 213. Des dispositifs de mesure de la rugosité ou du relief d'une surface sont par ailleurs connus, par exemple par le document FR-A-2 208 107 ou FR-A-2 593 599. Ces procédés font généralement appel à des faisceaux lumineux collimatés envoyés sur la surface et rétrodiffusés par elle dans des conditions qui permettent d'obtenir des informations locales sur la surface ; l'ensemble des informations locales permet de reconstituer une information générale sur la surface.

Cependant en matière de fini de surface métallique, l'Homme du métier s'est jusqu'ici fié avant tout à son expérience et à un jugement empirique, que les procédés précités, trop sophistiqués, sont impuissants à remplacer. L'Homme du métier se fonde sur l'aspect visuel de la tôle examinée pour lui attribuer un classement : quoique le classement ne soit pas sans rapport avec la rugosité de la surface, ce n'est pas la connaissance de celle-ci qui le détermine, mais plutôt des critères tels que l'homogénéïté, la "couleur" ou la "densité" (aspect aéré ou serré) de l'échantillon, ces critères définissant plus une texture de la surface que sa rugosité.

Le but de l'invention est de proposer un procédé et un dispositif automatiques d'identification du fini d'une surface métallique qui puisse remplacer l'appréciation humaine.

Ce but est atteint par un procédé selon lequel :

. on éclaire omnidirectionnellement ladite surface (ou du moins un échantillon de celle-ci),

. on forme une image numérique matricielle de ladite surface, où chaque point matriciel est associé à une valeur de l'intensité de gris fonction de l'intensité lumineuse émise par l'élément de surface correspondant,

. on traite l'ensemble des valeurs recueillies de la manière suivante:

- on établit l'histogramme, réalisé pour l'ensemble des points matriciels, du nombre de points par niveau d'intensité de gris,

- on calcule les quatre premiers moments statistiques de cet histogramme, qui forment un quadruplet constituant quatre coordonnées d'un vecteur d'identification de l'image, d'ordre supérieur ou égal à quatre, ce quadruplet étant représentatif de l'image,

- on compare ledit quadruplet de l'image à au moins l'un de plusieurs quadruplets préalablement répertoriés et identifiés,

- et si le quadruplet de l'image est égal, compte tenu de tolérances prédéterminées pour chaque moment, à l'un desdits quadruplets répertoriés, on attribue audit quadruplet l'identité propre audit quadruplet répertorié.

On a en effet découvert que le choix, en tant que descripteurs de l'échantillon, des quatre premiers moments statistiques, qui caractérisent respectivement la moyenne, la dispersion, la dissymétrie et l'aplatissement de l'histogramme, permet d'obtenir un classement des finis de surface qui corrobore l'appréciation empirique de l'Homme du métier, tout en y apportant une fiabilité objective.

Il est précisé que les quatre moments précités sont nécessaires mais non obligatoirement suffisant pour définir totalement l'image, c'est-à-dire pour pouvoir pratiquement la reconstituer. Ils constituent en fait quatre coordonnées d'un vecteur d'un espace à n dimensions, où n est supérieur ou égal à quatre, les autres coordonnées de ce vecteur étant nécessaires pour définir totalement l'image. Par contre, les quatre moments considérés sont suffisamment descriptifs de l'image pour pouvoir réaliser une comparaison entre deux images.

L'éclairage global omnidirectionnel de l'échantillon de surface est aussi uniforme que possible. Il s'agit de préférence d'un éclairage annulaire, de lumière blanche, surplombant le disque-échantillon, centré sur l'axe optique du système. L'éclairage est avantageusement associé à une régulation.

La formation d'une image numérique matricielle se fait selon les procédés classiques en la matière, de préférence au moyen d'une caméra matricielle et d'une optique classique associée adéquate, permettant d'assurer la qualité de la prise de vue.

Selon un aspect important de l'invention, la comparaison du quadruplet descripteur de l'échantillon à ceux du répertoire s'effectue par tests successifs sur les moments statistiques hiérarchisés, en commençant par le moment d'ordre 1.

Si le quadruplet descripteur de l'échantillon n'est pas reconnu, il est possible de l'inscrire dans le répertoire de manière à enrichir celui-ci ; le système de l'invention se perfectionne ainsi en permanence.

Le procédé de l'invention s'applique à une observation statique de l'échantillon ; mais la rapidité des systèmes de traitement numériques de l'information permet d'envisager une exploration en continu d'une surface en défilement : il est possible de surveiller en permanence l'évolution du quadruplet descripteur et, par exemple, de détecter sa sortie d'un domaine réputé normal, l'appréciation de sortie de ce domaine se faisant de préférence sur le traitement de plusieurs images consécutives (trois par exemple), pour éviter la prise en compte d'une éventuelle image parasitée par exemple par un défaut de surface très localisé.

L'invention concerne également le dispositif de mise en oeuvre du procédé ci-dessus décrit ; un tel dispositif comprend :

. des moyens d'éclairage global omnidirectionnel de ladite surface,

. des moyens de formation d'une image numérique matricielle de ladite surface, où chaque point matriciel est associé à une valeur de l'intensité de gris fonction de l'intensité lumineuse émise par l'élément de surface correspondant,

. des moyens de traitement de l'ensemble des valeurs recueillies agencés de manière à :
- calculer les quatre premiers moments statistiques de l'histogramme, réalisé pour l'ensemble des points matriciels, du nombre de points par niveau d'intensité de gris,
- former avec ces quatre moments un quadruplet représentatif de l'image et constituant quatre coordonnées d'un vecteur d'identification de l'image, d'ordre supérieur ou égal à quatre,
- comparer le quadruplet de l'image à au moins l'un de plusieurs quadruplets préalablement répertoriés et identifiés,
- et si ledit quadruplet de l'image est égal, compte tenu de tolérances prédéterminées pour chaque moment, à l'un desdits quadruplets répertoriés, attribuer audit quadruplet de l'image l'identité propre audit quadruplet répertorié,

. et des moyens de restitution des résultats dudit traitement.

D'autres caractéristiques et avantages de l'invention ressortiront de la description suivante faite en référence aux dessins annexés sur lesquels :

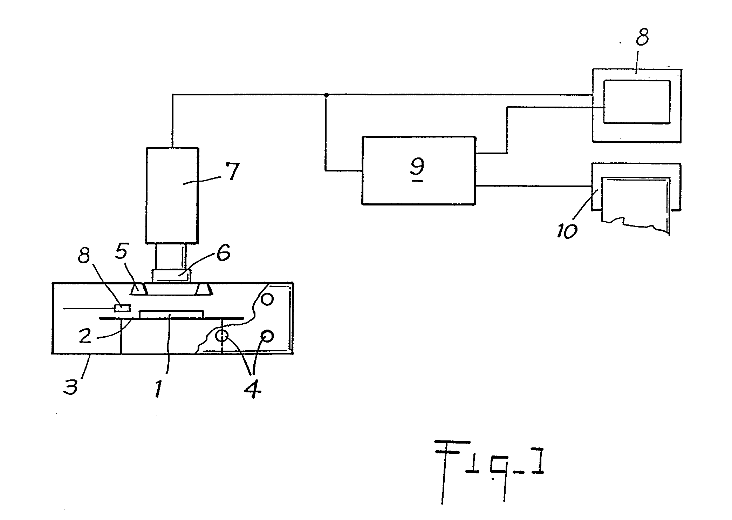

. la figure 1 représente schématiquement un dispositif selon l'invention, appliqué à l'observation statique d'un échantillon.

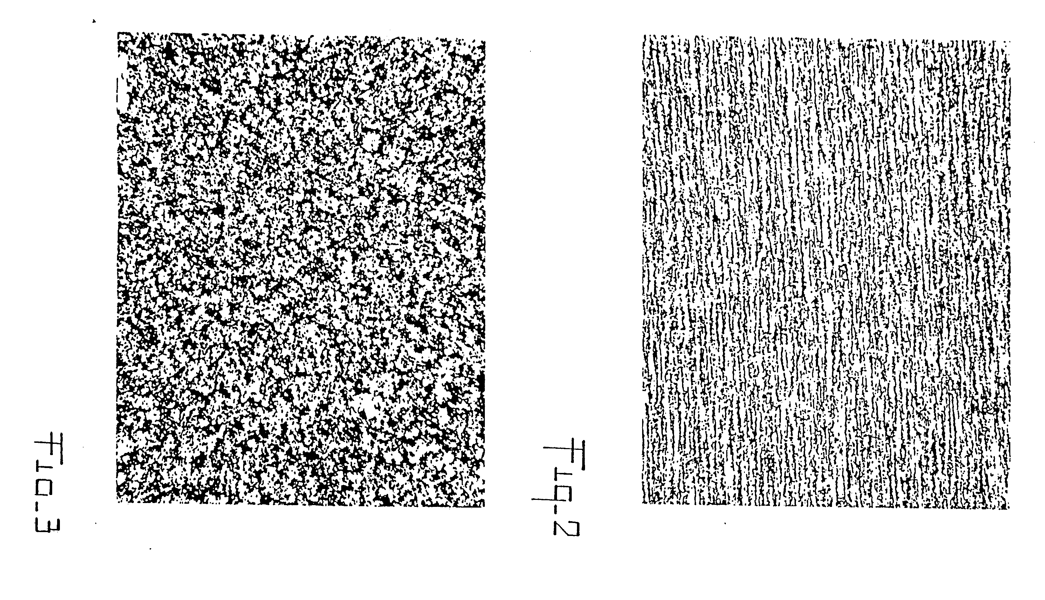

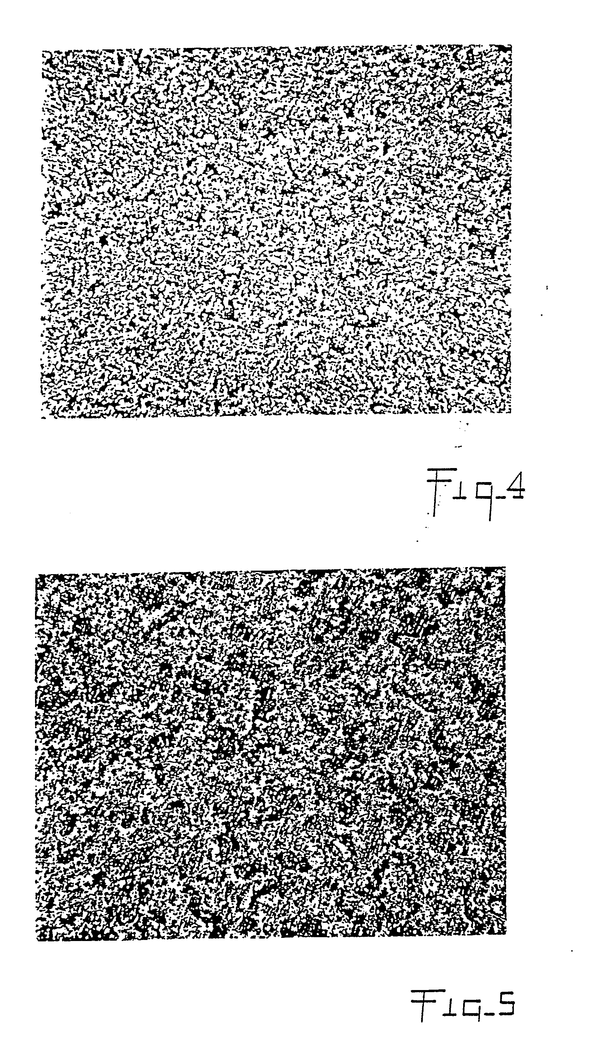

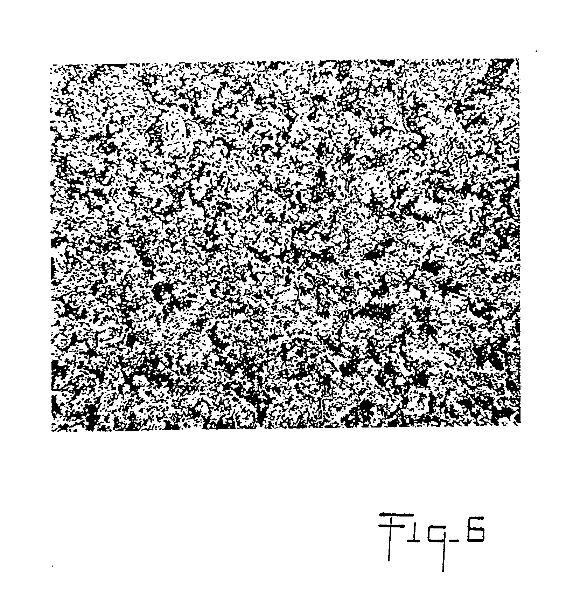

. les figures 2 à 6 sont des photographies d'échantillons de classes de fini différentes, prises dans des conditions d'éclairage du dispositif de la figure 1 et avec un grossissement de X40.

On y voit un disque-échantillon de surface 1, de quelques dizaines de cm², placé sur un porte-échantillon 2 à l'intérieur d'une chambre de travail 3. Le porte-échantillon 2 est mobile dans deux directions horizontales grâce à des moyens de montage classiques non représentés ; il peut être manoeuvré manuellement, ou à partir de boutons ou manettes 4. La mobilité de l'échantillon permet notamment l'observation de zones différentes sur le même échantillon pour éviter les indications erronées qui pourraient résulter d'éventuelles perturbations de la surface. Elle permet par exemple l'élimination de zones fortement perturbées, ou d'effectuer la moyenne des valeurs déterminées sur différentes zones pour prendre en compte la légère hétérogénéité du fini de surface sur des zones saines.

La chambre 3 est fermée de manière à ne pas subir l'influence de l'éclairement extérieur, et éclairée, au dessus du porte-échantillon 2, par un éclairage annulaire 5 entourant l'extrémité de l'optique 6 d'une caméra matricielle 7 verticale.

L'éclairage annulaire est avantageusement équipé d'un dispositif stabilisateur classique comportant un capteur 8 d'éclairement agissant par une boucle de rétroaction sur l'alimentation de l'éclairage. Si le dispositif d'analyse des intensités de gris travaille selon un procédé différentiel plutôt qu'absolu, cette stabilisation n'est pas nécessaire.

La caméra matricielle 7 est une caméra matricielle (détecteur à transfert de charge) composée d'une matrice photosensible (par exemple de 256x384 capteurs) qui produit un signal vidéo analogique.

Ce signal peut être lu sur un écran de contrôle 8 qui donne alors l'image matricielle de l'échantillon 1.

Le signal est également introduit dans le dispositif de traitement numérique 9. Celui-ci reçoit l'information sous forme d'un ensemble de triplets caractéristiques de chaque point matriciel et composé des coordonnées bidimensionnelles du point et de l'intensité de gris relative à ce point. A partir de cette information, le dispositif calcule les quatre premiers moments statistiques de l'histogramme du nombre de points matriciels en fonction de leur niveau de gris. Les résultats de ce calcul peuvent être affichés sur l'écran 8 ou l'imprimante 10. Ce calcul fait, l'échantillon est caractérisé par ces quatre descripteurs, qui vont permettre son identification.

L'identification n'est possible que si un répertoire a été préalablement constitué. Ce répertoire est créé à partir d'échantillons connus dont on a calculé les descripteurs.

L'identification d'un échantillon inconnu consiste alors à rapprocher le quadruplet constitué par ses quatre descripteurs calculés d'un quadruplet d'un échantillon connu. Pour y parvenir, il s'est avéré que la méthode la plus rapide consistait à tester successivement et hiérarchiquement les quatre descripteurs, en commençant par le premier moment. Chaque test d'ordre i compare le moment d'ordre i calculé avec l'ensemble des moments d'ordre i répertoriés : si le moment calculé s'approche suffisamment (selon une tolérance prédéterminée) d'un moment du répertoire, on entame le test d'ordre i + 1 ; sinon, l'échantillon est immédiatement déclaré non reconnu. Si les quatre tests successifs d'ordre 1,2,3,4 ont été positifs, l'échantillon est déclaré identifié et reçoit la qualification de son homologue du répertoire, qualification qui peut être affichée sur l'écran ou l'imprimante.

En face d'un échantillon non reconnu, le système peut être utilisé de deux manières. Ou bien l'échantillon est définitivement écarté, ou bien on en profite pour enrichir le répertoire dans lequel il n'a pas d'homologue.

Selon une variante du procédé d'identification, on cherche à s'assurer qu'un échantillon appartient bien à une classe identifiée. Dans ce cas, il n'est pas nécessaire de comparer le quadruplet calculé à l'ensemble des quadruplets du répertoire, mais aux seuls quadruplets de ladite classe.

A titre d'illustration de l'invention, on a donné dans le tableau ci-dessous un exemple de répertoire avec les valeurs des moments statistiques calculés pour cinq types de fini différents, dont les photographies sont aux figs.2 à 6.

| type de fini | F2 | F3A | F5B | F7B | F10 |
|---|---|---|---|---|---|
| moment 1 | 161 | 167 | 182 | 180 | 171 |
| moment 2 | 49 | 67 | 50 | 86 | 90 |
| moment 3 | 0,1 | 0,2 | 0,1 | 0,2 | 0,1 |
| moment 4 | 2,2 | 3,2 | 3 | 2,8 | 3 |
| photo | fig.2 | fig.3 | fig.4 | fig.5 | fig.6 |

Dans cet exemple, on observe que l'ensemble des finis de surface peut être discriminé à l'aide des quatre premiers moment statistiques et que suivant le cas présenté le descripteur discriminant n'est pas le même.

Les résultats obtenus à l'aide de ce répertoire apportent un taux de reconnaissance de l'ordre de 85% des échantillons présentés, c'est-à-dire que 85% des échantillons classés par l'Homme du métier dans l'un des types de fini du tableau sont reconnus par le dispositif comme appartenant à ce type. La confusion observée dans certains cas s'explique par le fait qu'un échantillon peut appartenir simultanément à deux classes voisines (chevauchement des bornes limites des caractéristiques d'un échantillon). Il est à noter que dans ces conditions, l'Homme de métier et le dispositif de l'invention sont en accord.

Par ailleurs il est précisé que dans le cadre des expériences réalisées par les inventeurs, afin de déterminer les tolérances optimales sur chaque moment, il a été utilisé une méthode connue basée sur l'utilisation de l'écart type sur chaque moment déterminé lors de l'apprentissage. On pourra pour de plus amples renseignements sur de telles méthodes se référer à l'ouvrage "Recherche et Expérimentation en Agriculture" de F.Boeuf et A.Vessereau : Tome II - Méthodes statistiques en Biologie et en Agronomie - Chapitre III à VI ; dont l'enseignement est incorporé ici par référence.

**Revendications**

1) Procédé d'identification du fini d'une surface métallique, caractérisé en ce que :
on éclaire omnidirectionnellement ladite surface (ou du moins un échantillon de celle-ci),
. on forme une image numérique matricielle de ladite surface, où chaque point matriciel est associé à une valeur de l'intensité de gris fonction de l'intensité lumineuse émise par l'élément de surface correspondant,
. on traite l'ensemble des valeurs recueillies de la manière suivante:
- on établit l'histogramme, réalisé pour l'ensemble des points matriciels, du nombre de points par niveau d'intensité de gris,
- on calcule les quatre premiers moments statistiques de cet histogramme, qui forment un quadruplet constituant quatre coordonnées d'un vecteur d'identification de l'image, d'ordre supérieur ou égal à quatre, ce quadruplet étant représentatif de l'image,
- on compare ledit quadruplet de l'image à au moins l'un de plusieurs quadruplets préalablement répertoriés et identifiés,
- et si le quadruplet de l'image est égal, compte tenu de tolérances prédéterminées pour chaque moment, à l'un desdits quadruplets répertoriés, on attribue audit quadruplet l'identité propre audit quadruplet répertorié.

2) Procédé selon la revendication 1, caractérisé en ce qu'on compare le quadruplet de l'image par tests successifs sur les moments statistiques hiérarchisés en commençant par le moment d'ordre 1.

3) Procédé selon l'une quelconque des revendications 1 ou 2, caractérisé en ce que si le quadruplet de l'image à identifier n'est pas égal, auxdites tolérances près, à l'un desdits quadruplets répertoriés, on le répertorie.

4) Dispositif d'identification du fini d'une surface métallique, caractérisé en ce qu'il comprend :
. des moyens (5) d'éclairage global omnidirectionnel de ladite surface,
. des moyens (6,7) de formation d'une image numérique matricielle de ladite surface, où chaque point matriciel est associé à une valeur de l'intensité de gris fonction de l'intensité lumineuse émise par l'élément de surface correspondant,
des moyens (9) de traitement de l'ensemble des valeurs recueillies agencés de manière à :
- calculer les quatre premiers moments statistiques de l'histogramme, réalisé pour l'ensemble des points matriciels, du nombre de points par niveau d'intensité de gris,
- former avec ces quatre moments un quadruplet représentatif de l'image et constituant quatre coordonnées d'un vecteur d'identification de l'image, d'ordre supérieur ou égal à quatre,
- comparer le quadruplet de l'image à au moins l'un de plusieurs quadruplets préalablement répertoriés et identifiés,
- et si ledit quadruplet de l'image est égal, compte tenu de tolérances prédéterminées pour chaque moment à l'un desdits quadruplets répertoriés, attribuer audit quadruplet de l'image l'identité propre audit quadruplet répertorié,
. et des moyens de restitution des résultats dudit traitement.

5) Dispositif selon la revendication 4, caractérisé en ce que les moyens (5) d'éclairage sont annulaires.

6) Dispositif selon l'une quelconque des revendications 4 ou 5, caractérisé en ce que les moyens (5) d'éclairage sont associés à un dispositif (8) de régulation de l'intensité lumineuse.

7) Dispositif selon l'une quelconque des revendications 4 à 6, caractérisé en ce que les moyens (6,7) de formation d'image comprennent une caméra matricielle.

8) Dispositif selon l'une quelconque des revendications 4 à 7, caractérisé en ce que les moyens (9) de traitement sont associés à un écran (8) de visualisation et/ou une imprimante (10).

Fig-1

Fig-2

Fig-3

Fig-4

Fig-5

Fig. 6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | JP-A-59 079 804 (NIPPON KOKAN) <br> * En entier * <br> --- | 1 | G 01 B 11/30 |
| A | JP-A-62 191 742 (HITACHI) <br> * En entier * <br> --- | 1,3,7 | |
| A | JP-A-57 179 609 (SHIN NIPPON SEITETSU K.K.) <br> * En entier * <br> --- | 1 | |
| A | GB-A-2 115 142 (OWENS-ILLINOIS INC.) <br> * Résumé; figures * <br> --- | 1,7 | |
| A | SOCIETY FOR INFORMATION DISPLAY INTERNATIONAL SYMPOSIUM DIGEST OF TECHNICAL PAPERS, New Orleans, Louisiana, 12-14 mai 1987, vol. XVIII, pages 279-282, Palisades Institute for Research Services, Inc., New York, US; V.-M. HUYNH et al.: "A new optical method of paper roughness measurement for hard-copy devices" <br> * En entier * <br> --- | 1,7,8 | |
| A | US-A-4 682 220 (HAYIME IND. LTD) <br> * En entier * <br> --- | 5,7 | G 01 B 11 |
| A | PATENT ABSTRACTS OF JAPAN, vol. 11, no. 15 (P-536)[2462], 16 janvier 1987; & JP-A-61 189 406 (HITACHI LTD) 19-02-1985 <br> * Résumé * <br> ----- | 1,3 | |

**DOMAINES TECHNIQUES RECHERCHES (Int. Cl.5)**

Le présent rapport a été établi pour toutes les revendications

| Lieu de la recherche | Date d'achèvement de la recherche | Examinateur |
|---|---|---|
| LA HAYE | 28-09-1982 | RAMBOER P. |

EPO FORM 1503 03.82 (P0402)